# EUROPEAN PATENT APPLICATION

(11) **EP 4 432 408 A1**
(43) Date of publication of application: **18.09.2024**
(21) Application number: 22893194.5
(22) Date of filing: 09.11.2022
(51) Int. Cl.: H01M 8/2465, H01M 8/2483, H01M 8/2432, C25B 9/70, C25B 9/77, C25B 13/07, H01M 8/12

(54) **STRESS RELIEF STRUCTURE**

(30) Priority: 12.11.2021 KR 20210155624
(71) Applicant: E & Koa Co., Daejeon 34325 (KR)
(72) Inventor: LEE, In Sung, Seoul 03989 (KR); LEE, Yong Hyun, Sejong 30100 (KR); KIM, Bum Soo, Seoul 06360 (KR); KIM, Kyeongil, Chungju-si Chungcheongbuk-do 27353 (KR); HWANG, Hyoki, Daejeon 34680 (KR); LEE, Young Sang, Cheongju-si Chungcheongbuk-do (KR); KIM, Jun Young, Sejong 30124 (KR); JUNG, Jin-mook, Daejeon 34415 (KR); LEE, Byeongjun, Daejeon 34323 (KR); CHOI, Sung Man, Nonsan-si Chungcheongnam-do 32936 (KR)
(74) Representative: Viering, Jentschura & Partner mbB Patent- und Rechtsanwälte
(86) International application number: PCT/KR2022/017555
(87) International publication number: WO 2023/085774

(57) **Abstract**

A stress relief structure according to the present invention comprises: a dummy interconnect positioned below a cell stack; a connection module positioned below the dummy interconnect; a stress distribution module encompassing the connection module below the dummy interconnect; and a manifold positioned below the connection module and the stress distribution module, wherein the manifold forms a fluid path together with the stress distribution module, the dummy interconnect and the cell stack, the stress distribution module is fixed to the manifold so as to have a pseudo bellows flow movement on the manifold, and the connection module protrudes vertically from the stress distribution module and extends horizontally toward the stress distribution module so as to couple the stress distribution module to the dummy interconnect.

## Description

### [Technical Field]

The present invention relates to a stress relief structure located under a plurality of solid oxide fuel cells (SOFCs) or a plurality of solid oxide electrolysis cells (SOECs) .

The following national research and development program has supported the present invention.
Project Unique Number 1415175457
Project Serial Number 20208520000210
Government Department Ministry of Trade, Industry and Energy
Specialized Institution for Project Management Korea Institute of Energy Technology Evaluation and Planning
Title of Research Business International Energy Joint Research Program
Title of Project (Korea-Germany) Development of core component technology for a 1kW reversible solid oxide cell stack to enhance hydrogen productivity and its utilization
Contribution Rate 1/1
Supervising Institute E & KOA CO.
Research Period 2021-06-01 to 2021-12-31

### [Background Art]

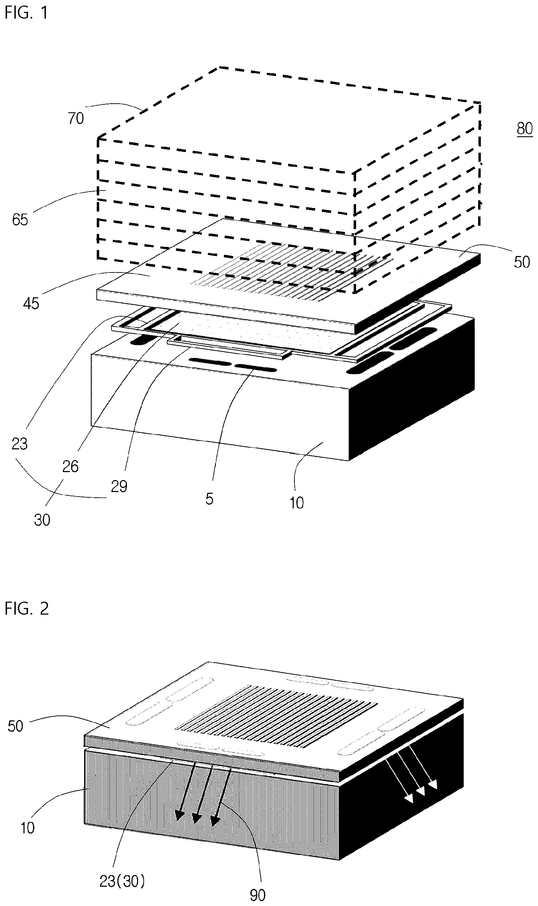

Generally, as shown in FIG. 1, a cell stack apparatus 80 includes a manifold 10, a connection module 30, a dummy interconnect 50, and a cell stack 70, which are sequentially stacked. Here, each of the manifold 10 and the dummy interconnect 50 is made of stainless steel. The connection module 30 includes a conductive plate 23 and a current collector 26, which are sequentially stacked, and a sealant 29 configured to enclose the conductive plate 23 and the current collector 26.

The sealant 29 is made of a glass material and encloses slits 5 of the manifold 10 and through-holes 45 of the dummy interconnect 50 between the manifold 10 and the dummy interconnect 50. The cell stack 70 includes a plurality of solid oxide fuel cells 65 or a plurality of solid oxide electrolysis cells 65.

In addition, the manifold 10 and the dummy interconnect 50 supply fuel gas and oxygen gas to the individual solid oxide fuel cells 65, or supply oxygen gas and water vapor to the individual solid oxide electrolysis cells 65, through the slits 5 and the through-holes 45. The fuel gas and the oxygen gas or the oxygen gas and the water vapor contact an anode and a cathode in the individual solid oxide fuel cell 65 or individual solid oxide electrolysis cell 65.

The anode, a solid electrolyte, and the cathode use the fuel gas and the oxygen gas to generate electricity in the individual solid oxide fuel cell 65, and use the oxygen gas and the water vapor to generate hydrogen in the individual solid oxide electrolysis cell 65. In this case, the manifold 10 and the dummy interconnect 50 have different heat capacities due to the thickness difference therebetween.

That is, referring to FIG. 1, the manifold 10 has a larger heat capacity than the dummy interconnect 50. Therefore, the sealant 29 is subjected to normal temperature and high temperature (e.g., a predetermined temperature between 500°C and 1,000°C) through repeated operation of the cell stack apparatus 80, and accumulates internal stress due to the difference in heat capacity between the manifold 10 and the dummy interconnect 50.

Accumulation of the internal stress causes the sealant 29 to crack, whereby the oxygen gas, the fuel gas, or the water vapor leaks between the manifold 10 and the dummy interconnect 50 along arrows 90 in FIG. 2.

### [Disclosure]

### [Technical Problem]

The present invention has been made in view of the above problems, and it is an object of the present invention to provide a stress relief structure suitable for preventing cracking of a sealant between a manifold and a dummy interconnect under a cell stack of a cell stack apparatus, the cell stack including a plurality of solid oxide fuel cells or a plurality of solid oxide electrolysis cells, despite repeated high temperature operation of the cell stack apparatus.

### [Technical Solution]

A stress relief structure according to the present invention includes a dummy interconnect located under a cell stack, a connection module located under the dummy interconnect, a stress distribution module located under the dummy interconnect, the stress distribution module being configured to enclose the connection module, and a manifold located under the connection module and the stress distribution module, wherein the manifold forms a fluid path together with the stress distribution module, the dummy interconnect, and the cell stack, the stress distribution module is fixed to the manifold and undergoes pseudo-bellows movement on the manifold, and the connection module protrudes vertically from the stress distribution module and extends horizontally toward the stress distribution module to couple the stress distribution module and the dummy interconnect to each other.

The cell stack may include a plurality of solid oxide fuel cells (SOFCs) or a plurality of solid oxide electrolysis cells (SOECs), and each of the solid oxide fuel cells or the solid oxide electrolysis cells may include a fluid flow inducement separator, a solid electrolyte plate, an anode plate, and a cathode plate.

The manifold may be formed in the shape of a quadrangular box having first to fourth sidewalls, having four isolated regions defined in the manifold, and having at least one slit located around each individual sidewall of the manifold outside the manifold, and the slit may be formed through the manifold so as to be located on the fluid path while exposing each individual isolated region to the outside of the manifold.

When the manifold is formed in the shape of a quadrangular box having first to fourth sidewalls, the stress distribution module may include a plurality of flow fragments stacked in the same numbers as the first to fourth sidewalls of the manifold, each of the flow fragments being disposed around a corresponding one of the individual sidewalls, when viewed from the individual sidewalls of the manifold, the plurality of flow fragments may be coupled to each other by laser welding to a brazing filler located between two neighboring flow fragments or by laser welding between the two neighboring flow fragments, and when viewed from the individual sidewalls of the manifold, the lowermost flow fragment may be fixed to the manifold by laser welding to a brazing filler located between the lowermost flow fragment and the manifold or by laser welding between the lowermost flow fragment and the manifold.

When viewed from the individual sidewalls of the manifold, the plurality of flow fragments may have a plurality of recesses formed in a lower side of each individual flow fragment of two neighboring flow fragments between the lowermost flow fragment and the uppermost flow fragment, a plurality of recesses formed in a lower side of an upper one of two neighboring flow fragments between the plurality of flow fragments, or a plurality of recesses formed in a lower side of a lower one of two neighboring flow fragments between the plurality of flow fragments.

When the manifold is formed in the shape of a quadrangular box having first to fourth sidewalls and having at least one slit located around each individual sidewall, the stress distribution module may include a plurality of flow fragments stacked in the same numbers as the first to fourth sidewalls of the manifold, each of the flow fragments being disposed around a corresponding one of the individual sidewalls, an inducement hole corresponding to the slit of the manifold may be formed in a central region of each individual flow fragment, and a receiving space may be defined in a central region of the manifold so as to be enclosed by the plurality of flow fragments such that the connection module is inserted into the receiving space.

The plurality of flow fragments may have a connection dam formed around an inducement hole of the lowermost flow fragment at a lower side of the lowermost flow fragment facing the manifold and around inducement holes of two neighboring flow fragments between the two flow fragments, the connection dam may be formed by laser welding to a brazing filler protruding from each individual flow fragment and located at each individual flow fragment or by laser welding applied to each individual flow fragment, the connection dam may enclose a plurality of inducement holes of each individual flow fragment or encloses one or each of the plurality of inducement holes, and when viewed from the slit of the manifold, the connection dam may have different occupied areas in two neighboring flow fragments of the plurality of flow fragments, the connection dam being repeated with the two neighboring flow fragments of the plurality of flow fragments as a unit.

The plurality of flow fragments may have a connection dam formed around an inducement hole of the lowermost flow fragment at the lower side of the lowermost flow fragment facing the manifold and around inducement holes of two neighboring flow fragments between the two flow fragments, the connection dam may be formed by laser welding to a brazing filler protruding from each individual flow fragment and located at each individual flow fragment or by laser welding applied to each individual flow fragment, the connection dam may enclose a plurality of inducement holes of each individual flow fragment or encloses one or each of the plurality of inducement holes, and when viewed from the slit of the manifold, the connection dam may have the same occupied area in two neighboring flow fragments of the plurality of flow fragments.

When viewed from the individual sidewalls of the manifold, the plurality of flow fragments may have a plurality of recesses formed in the lower side of each individual flow fragment of two neighboring flow fragments between the lowermost flow fragment and an uppermost flow fragment, a plurality of recesses formed in a lower side of an upper one of two neighboring flow fragments between the plurality of flow fragments, or a plurality of recesses formed in a lower side of a lower one of two neighboring flow fragments between the plurality of flow fragments.

When the stress distribution module includes a plurality of flow fragments stacked in the same numbers as the first to fourth sidewalls of the manifold formed in the shape of a quadrangular box, each of the flow fragments being disposed around a corresponding one of the individual sidewalls, an inducement hole corresponding to the slit of the manifold is formed in a central region of each individual flow fragment, and a receiving space is defined in a central region of the manifold so as to be enclosed by the plurality of flow fragments such that the connection module is inserted into the receiving space, the connection module may include a conductive plate and a current collector, the conductive plate and the current collector being quadrangular in shape and being sequentially stacked, and a plurality of sealants configured to enclose the current collector.

Each individual sealant may be formed on an uppermost one of the plurality of flow fragments at each individual sidewall of the manifold, may have the same shape as the uppermost flow fragment, may enclose an inducement hole of the uppermost flow fragment and the receiving space of the stress distribution module, and may have a guide hole corresponding to the inducement hole of each individual flow fragment.

The conductive plate and the current collector may be inserted into the receiving space of the stress distribution module, the current collector may protrude from the receiving space of the stress distribution module, and the current collector and each individual sealant may be in contact with the dummy interconnect.

When the stress distribution module includes a plurality of flow fragments stacked in the same numbers as the first to fourth sidewalls of the manifold formed in the shape of a quadrangular box, each of the flow fragments being disposed around a corresponding one of the individual sidewalls, an inducement hole corresponding to the slit of the manifold is formed in a central region of each individual flow fragment, and a receiving space is defined in a central region of the manifold so as to be enclosed by the plurality of flow fragments such that the connection module is inserted into the receiving space, and when the connection module includes a conductive plate and a current collector sequentially stacked in the receiving space of the stress distribution module and a plurality of sealants configured to enclose the current collector outside the receiving space of the stress distribution module, the dummy interconnect may be quadrangular in shape, may be located above the current collector and the individual sealants, and may have a through-hole located at an edge of the dummy interconnect so as to correspond to a guide hole of each individual sealant.

The through-hole of the dummy interconnect may correspond to an inducement hole of the uppermost flow fragment and may be enclosed by the individual sealants together with the inducement hole of the uppermost flow fragment.

When the cell stack includes a plurality of solid oxide fuel cells or a plurality of solid oxide electrolysis cells, the dummy interconnect may have a plurality of channels or trenches formed in a central region of the dummy interconnect under the cell stack, the plurality of channels or trenches being configured to allow oxygen gas or water vapor to flow therethrough in one direction.

### [Advantageous Effects]

A stress relief structure according to the present invention includes
a manifold, a stress distribution module, and a dummy interconnect sequentially stacked under a cell stack of a cell stack apparatus and a connection module enclosed by the stress distribution module, wherein
the stress distribution module is formed so as to have a pseudo-bellows shape, whereby the stress distribution module undergoes pseudo-bellows movement during repeated high temperature operation of the cell stack, and a plurality of sealants in the connection module is attached to the stress distribution module and the dummy interconnect, and therefore
it is possible to prevent cracking of each individual sealant between the manifold and the dummy interconnect under the cell stack of the cell stack apparatus, the cell stack including a plurality of solid oxide fuel cells or a plurality of solid oxide electrolysis cells, despite repeated high temperature operation of the cell stack apparatus.

### [Description of Drawings]

FIG. 1 is an exploded view schematically showing a conventional cell stack apparatus.
FIG. 2 is a perspective view showing a manifold, a connection module, and a dummy interconnect in the cell stack apparatus of FIG. 1.
FIG. 3 is a sectional view showing a stress relief structure according to the present invention.
FIG. 4 is an exploded perspective view showing the stress relief structure of FIG. 3.
FIG. 5 is a perspective view partially showing a stress distribution module in the stress relief structure of FIG. 4.
FIG. 6 is an exploded perspective view schematically showing a connection dam provided at each individual one of a plurality of flow fragments in the stress distribution module of FIG. 5.
FIG. 7 is an exploded perspective view showing a modification of the connection dam provided at each individual flow fragment of FIG. 6.
FIG. 8 is a sectional view of the stress relief structure taken along line I-I' of FIG. 4, showing the stress distribution module in an enlarged state.

### [Best Mode]

Now, preferred embodiments of the present invention will be described in detail with reference to the accompanying drawings such that the present invention can be easily implemented by a person having ordinary skill in the art to which the present invention pertains.

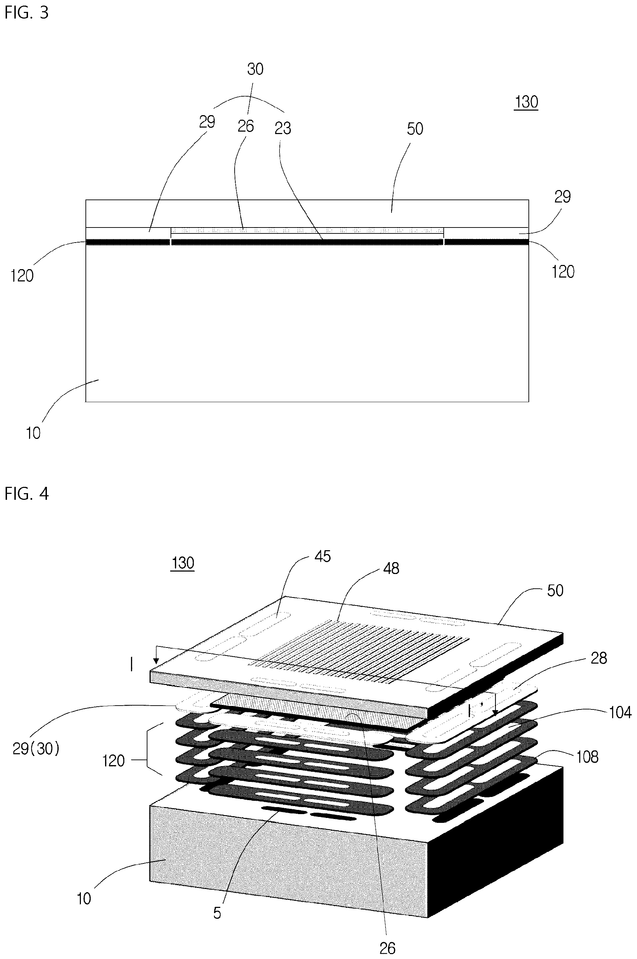

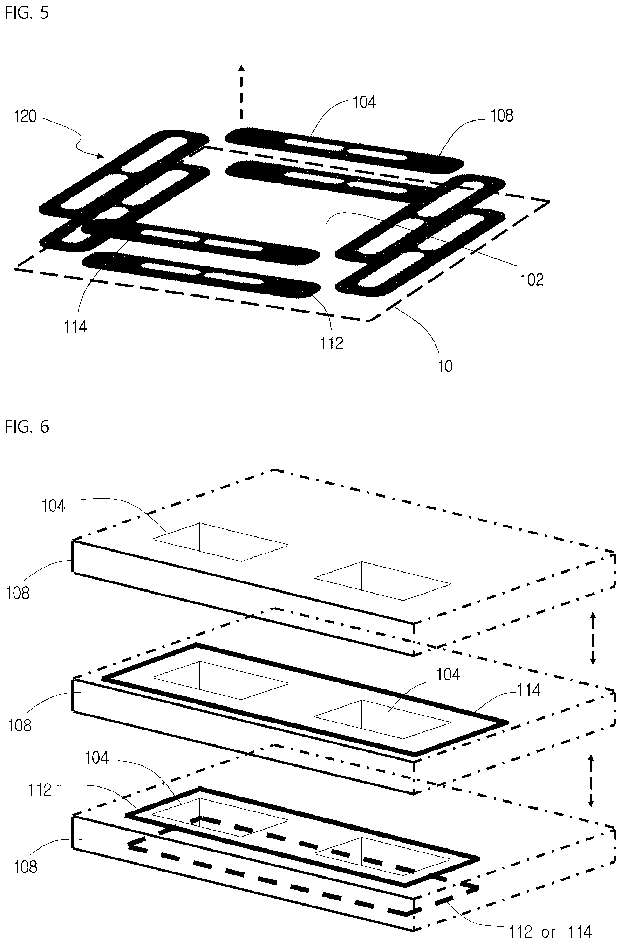

FIG. 3 is a sectional view showing a stress relief structure according to the present invention, FIG. 4 is an exploded perspective view showing the stress relief structure of FIG. 3, and FIG. 5 is a perspective view partially showing a stress distribution module in the stress relief structure of FIG. 4.

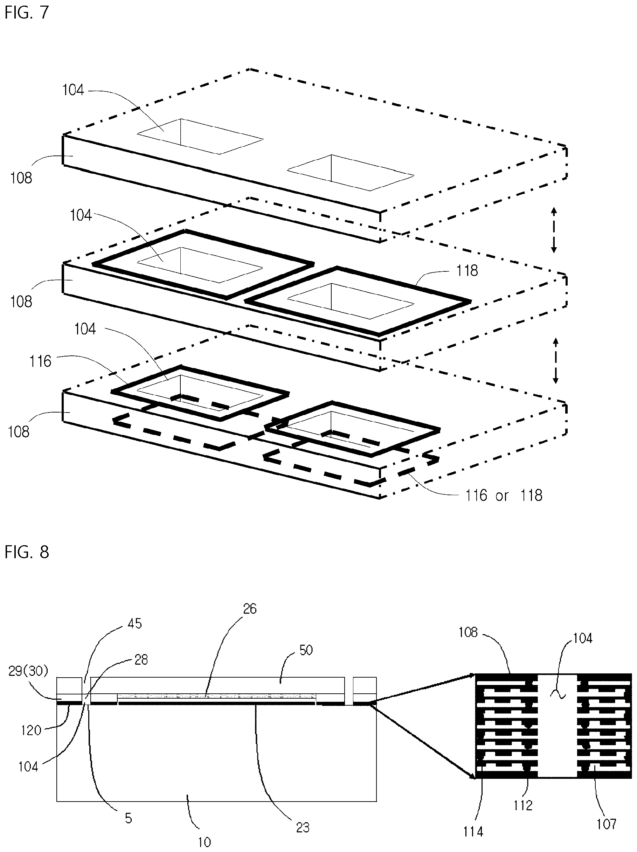

In addition, FIG. 6 is an exploded perspective view schematically showing a connection dam provided at each individual one of a plurality of flow fragments in the stress distribution module of FIG. 5, FIG. 7 is an exploded perspective view showing a modification of the connection dam provided at each individual flow fragment of FIG. 6, and FIG. 8 is a sectional view of the stress relief structure taken along line I-I' of FIG. 4, showing the stress distribution module in an enlarged state.

Here, FIGs. 3 to 8 are described with reference to FIG. 1, and the same members as in FIG. 1 are denoted by the same reference numerals.

Referring to FIGs. 3 to 8, the stress relief structure 130 according to the present invention includes a dummy interconnect 50 located under a cell stack 70 (FIG. 1) of a cell stack apparatus 80 (FIG. 1), a connection module 30 located under the dummy interconnect 50, a stress distribution module 120 located under the dummy interconnect 50, the stress distribution module being configured to enclose the connection module 30, and a manifold 10 located under the connection module 30 and the stress distribution module 120, as shown in FIGs. 3 and 4.

Schematically, referring to FIGs. 3 and 4, the manifold 10 forms a fluid path (not shown) together with the stress distribution module 120, the dummy interconnect 50, and the cell stack 70. Referring to FIGs. 3 to 6, the stress distribution module 120 is fixed to the manifold 10 and undergoes pseudo-bellows movement on the manifold 10. Referring to FIGs. 3 and 4, the connection module 30 protrudes vertically from the stress distribution module 120 and extends horizontally toward the stress distribution module 120 to couple the stress distribution module 120 and the dummy interconnect 50 to each other.

More specifically, the cell stack 70 includes a plurality of solid oxide fuel cells (SOFCs) 65 (FIG. 1) or a plurality of solid oxide electrolysis cells (SOECs) 65 (FIG. 1). Here, each of the solid oxide fuel cells or the solid oxide electrolysis cells 65 includes a fluid flow inducement separator, a solid electrolyte plate, an anode plate, and a cathode plate although not shown in the figures.

Referring to FIG. 4, the manifold 10 is formed in the shape of a quadrangular box having first to fourth sidewalls, having four isolated regions (not shown) defined in the manifold 10, and having at least one slit 5 located around each individual sidewall of the manifold 10 outside the manifold 10. Here, referring to FIG. 4, the slit 5 is formed through the manifold 10 so as to be located on the fluid path while exposing each individual isolated region to the outside of the manifold 10.

When the manifold 10 is formed in the shape of a quadrangular box having first to fourth sidewalls, as shown in FIG. 4, the stress distribution module 120 includes a plurality of flow fragments 108 stacked in the same numbers as the first to fourth sidewalls of the manifold 10, each of the flow fragments being disposed around a corresponding one of the individual sidewalls, as shown in FIGs. 4 to 7. When viewed from the individual sidewalls of the manifold 10, the plurality of flow fragments 108 is coupled to each other by laser welding to brazing fillers 112 and 114 or 116 and 118 located between two neighboring flow fragments 108 or by laser welding between two neighboring flow fragments 108, and when viewed from the individual sidewalls of the manifold 10, the lowermost flow fragment 108 is fixed to the manifold 10 by laser welding to brazing fillers 112 and 114 or 116 and 118 located between the lowermost flow fragment 108 and the manifold 10 or by laser welding between the lowermost flow fragment 108 and the manifold 10.

Here, laser welding may be applied to the manifold 10 or to the individual flow fragments 108 along the traces of the brazing fillers 112 and 114 or 116 and 118. Referring to FIGs. 6 to 8, when viewed from the individual sidewalls of the manifold 10, the plurality of flow fragments 108 may have a plurality of recesses 107 formed in a lower side of each individual flow fragment 108 of two neighboring flow fragments 108 between the lowermost flow fragment 108 and the uppermost flow fragment 108, may have a plurality of recesses 107 formed in a lower side of an upper flow fragment 108 of two neighboring flow fragments 108 between the plurality of flow fragments 108, or may have a plurality of recesses 107 formed in a lower side of a lower flow fragment 108 of two neighboring flow fragments 108 between the plurality of flow fragments 108.

Similarly, when the manifold 10 is formed in the shape of a quadrangular box having first to fourth sidewalls and having at least one slit 5 located around each individual sidewall, as shown in FIGs. 3 and 4, the stress distribution module 120 includes a plurality of flow fragments 108 stacked in the same numbers as the first to fourth sidewalls of the manifold 10, each of the flow fragments being disposed around a corresponding one of the individual sidewalls, wherein an inducement hole 104 corresponding to the slit 5 of the manifold 10 is formed in a central region of each individual flow fragment 108, and a receiving space 102 is defined in a central region of the manifold 10 so as to be enclosed by the plurality of flow fragments 108 such that the connection module 30 is inserted into the receiving space, as shown in FIGs. 4 and 5.

Referring to FIGs. 6 or 7, the plurality of flow fragments 108 has a connection dam formed around the inducement hole 104 of the lowermost flow fragment 108 at the lower side of the lowermost flow fragment 108 facing the manifold 10 and around the inducement holes 104 of two neighboring flow fragments 108 between the two flow fragments 108. Here, referring to FIG. 6 or 7, the connection dam is formed by laser welding to brazing fillers 112 and 114 or 116 and 118, which protrude from each individual flow fragment 108 and are located at each individual flow fragment 108, or by laser welding applied to each individual flow fragment 108. The connection dam encloses a plurality of inducement holes 104 of each individual flow fragment 108, as shown in FIG. 6, or encloses one or each of the plurality of inducement holes 104, as shown in FIG. 7. When viewed from the slit 5 of the manifold 10, the connection dam has different occupied areas in two neighboring flow fragments 108 of the plurality of flow fragments 108, the connection dam being repeated with the two neighboring flow fragments 108 of the plurality of flow fragments 108 as a unit.

As a modification, referring to FIGs. 6 or 7, the plurality of flow fragments 108 may have a connection dam formed around the inducement hole 104 of the lowermost flow fragment 108 at the lower side of the lowermost flow fragment 108 facing the manifold 10 and around the inducement holes 104 of two neighboring flow fragments 108 between the two flow fragments 108. Referring to FIG. 6 or 7, the connection dam is formed by laser welding to brazing fillers 112 and 112, 114 and 114, 116 and 116, or 118 and 118, which protrude from each individual flow fragment 108 and are located at each individual flow fragment 108, or by laser welding applied to each individual flow fragment 108. The connection dam encloses a plurality of inducement holes 104 of each individual flow fragment 108, as shown in FIG. 6, or encloses one or each of the plurality of inducement holes 104, as shown in FIG. 7. When viewed from the slit 5 of the manifold 10, the connection dam has the same occupied area in two neighboring flow fragments 108 of the plurality of flow fragments 108.

Here, the connection dam may cause the plurality of flow fragments 108 to correspond to a pseudo-bellows shape on the manifold 10, whereby the plurality of flow fragments 108 may slightly move from side to side relative to the manifold 10. Referring to FIGs. 6 to 8, when viewed from the individual sidewalls of the manifold 10, the plurality of flow fragments 108 may have a plurality of recesses 107 formed in a lower side of each individual flow fragment 108 of two neighboring flow fragments 108 between the lowermost flow fragment 108 and the uppermost flow fragment 108, may have a plurality of recesses 107 formed in a lower side of an upper flow fragment 108 of two neighboring flow fragments 108 between the plurality of flow fragments 108, or may have a plurality of recesses 107 formed in a lower side of a lower flow fragment 108 of two neighboring flow fragments 108 between the plurality of flow fragments 108.

Here, the plurality of recesses 107 may repeatedly create plate thickness differences in the individual flow fragments 108 during repeated high temperature operation of the cell stack apparatus 80, thereby constraining vertical movement of the individual flow fragments 108. Consequently, the connection dam and the plurality of recesses 107 may prevent cracking of a plurality of sealants 29 (FIG. 4) between the uppermost flow fragment 108 and the dummy interconnect 50 during repeated high temperature operation of the cell stack apparatus 80.

When the stress distribution module 120 includes a plurality of flow fragments 108 stacked in the same numbers as the first to fourth sidewalls of the manifold 10, which is formed in the shape of a quadrangular box, each of the flow fragments being disposed around a corresponding one of the individual sidewalls, wherein an inducement hole 104 corresponding to the slit 5 of the manifold 10 is formed in a central region of each individual flow fragment 108, and a receiving space 102 is defined in a central region of the manifold 10 so as to be enclosed by the plurality of flow fragments 108 such that the connection module 30 is inserted into the receiving space, as shown in FIGs. 4 and 5, the connection module 30 includes a conductive plate 23 and a current collector 26, each of which is quadrangular in shape and which are sequentially stacked, and a plurality of sealants 29 configured to enclose the current collector 26, as shown in FIGs. 3, 4, and 8.

Here, referring to FIGs. 3, 4, and 8, each individual sealant 29 is formed on the uppermost flow fragment 108 of the plurality of flow fragments 108 at each individual sidewall of the manifold 10, has the same shape as the uppermost flow fragment 108, encloses the inducement hole 104 of the uppermost flow fragment 108 and the receiving space 102 of the stress distribution module 120, and has a guide hole 28 corresponding to the inducement hole 104 of each individual flow fragment 108.

Referring to FIGs. 3 to 5 and 8, the conductive plate 23 and the current collector 26 are inserted into the receiving space 102 of the stress distribution module 120. The current collector 26 protrudes from the receiving space 102 of the stress distribution module 120. Referring to FIGs. 3 to 5, the current collector 26 and each individual sealant 29 are in contact with the dummy interconnect 50.

When the stress distribution module 120 includes a plurality of flow fragments 108 stacked in the same numbers as the first to fourth sidewalls of the manifold 10, which is formed in the shape of a quadrangular box, each of the flow fragments being disposed around a corresponding one of the individual sidewalls, wherein an inducement hole 104 corresponding to the slit 5 of the manifold 10 is formed in a central region of each individual flow fragment 108, and a receiving space 102 is defined in a central region of the manifold 10 so as to be enclosed by the plurality of flow fragments 108 such that the connection module 30 is inserted into the receiving space, as shown in FIGs. 3 to 5, and when the connection module 30 includes a conductive plate 23 and a current collector 26, which are sequentially stacked in the receiving space 102 of the stress distribution module 120, and a plurality of sealants 29 configured to enclose the current collector 26 outside the receiving space 102, as shown in FIGs. 3, 4, and 8, the dummy interconnect 50 is quadrangular in shape, is located above the current collector 26 and the individual sealants 29, and has a through-hole 45 located at an edge of the dummy interconnect 50 so as to correspond to the guide hole 28 of each individual sealant 29, as shown in FIGs. 3 and 4.

Referring to FIGs. 3 to 8, the through-hole 45 of the dummy interconnect 50 corresponds to the inducement hole 104 of the uppermost flow fragment 108 and is enclosed by the individual sealants 29 together with the inducement hole 104 of the uppermost flow fragment 108.

When the cell stack 70 includes a plurality of solid oxide fuel cells 65 or a plurality of solid oxide electrolysis cells 65, as shown in FIG. 1, the dummy interconnect 50 has a plurality of channels or trenches 48 formed in a central region of the dummy interconnect 50 under the cell stack 70 to allow oxygen gas or water vapor to flow therethrough in one direction, as shown in FIGs. 1 and 4. Here, referring to FIGs. 4, 5, and 8, the plurality of channels or trenches 48 is located on the fluid together path with the slit 5 of the manifold 10, the inducement hole 104 of each individual flow fragment 108, the guide hole 28 of each individual sealant 29, and the through-hole 45 of the dummy interconnect 50.

## Claims

1. A stress relief structure comprising:
a dummy interconnect located under a cell stack;
a connection module located under the dummy interconnect;
a stress distribution module located under the dummy interconnect, the stress distribution module being configured to enclose the connection module; and
a manifold located under the connection module and the stress distribution module, wherein
the manifold forms a fluid path together with the stress distribution module, the dummy interconnect, and the cell stack,
the stress distribution module is fixed to the manifold and undergoes pseudo-bellows movement on the manifold, and
the connection module protrudes vertically from the stress distribution module and extends horizontally toward the stress distribution module to couple the stress distribution module and the dummy interconnect to each other.

2. The stress relief structure according to claim 1, wherein
the cell stack comprises a plurality of solid oxide fuel cells (SOFCs) or a plurality of solid oxide electrolysis cells (SOECs), and
each of the solid oxide fuel cells or the solid oxide electrolysis cells comprises a fluid flow inducement separator, a solid electrolyte plate, an anode plate, and a cathode plate.

3. The stress relief structure according to claim 1, wherein
the manifold is formed in the shape of a quadrangular box having first to fourth sidewalls, having four isolated regions defined in the manifold, and having at least one slit located around each individual sidewall of the manifold outside the manifold, and
the slit is formed through the manifold so as to be located on the fluid path while exposing each individual isolated region to an outside of the manifold.

4. The stress relief structure according to claim 1, wherein
when the manifold is formed in the shape of a quadrangular box having first to fourth sidewalls,
the stress distribution module comprises a plurality of flow fragments stacked in the same numbers as the first to fourth sidewalls of the manifold, each of the flow fragments being disposed around a corresponding one of the individual sidewalls,
when viewed from the individual sidewalls of the manifold, the plurality of flow fragments is coupled to each other by laser welding to a brazing filler located between two neighboring flow fragments or by laser welding between the two neighboring flow fragments, and
when viewed from the individual sidewalls of the manifold, a lowermost flow fragment is fixed to the manifold by laser welding to a brazing filler located between the lowermost flow fragment and the manifold or by laser welding between the lowermost flow fragment and the manifold.

5. The stress relief structure according to claim 4, wherein
when viewed from the individual sidewalls of the manifold,
the plurality of flow fragments has:
a plurality of recesses formed in a lower side of each individual flow fragment of two neighboring flow fragments between the lowermost flow fragment and an uppermost flow fragment;
a plurality of recesses formed in a lower side of an upper one of two neighboring flow fragments between the plurality of flow fragments; or
a plurality of recesses formed in a lower side of a lower one of two neighboring flow fragments between the plurality of flow fragments.

6. The stress relief structure according to claim 1, wherein
when the manifold is formed in the shape of a quadrangular box having first to fourth sidewalls and having at least one slit located around each individual sidewall,
the stress distribution module comprises a plurality of flow fragments stacked in the same numbers as the first to fourth sidewalls of the manifold, each of the flow fragments being disposed around a corresponding one of the individual sidewalls,
an inducement hole corresponding to the slit of the manifold is formed in a central region of each individual flow fragment, and
a receiving space is defined in a central region of the manifold so as to be enclosed by the plurality of flow fragments such that the connection module is inserted into the receiving space.

7. The stress relief structure according to claim 6, wherein
the plurality of flow fragments has a connection dam formed around an inducement hole of a lowermost flow fragment 108 at a lower side of the lowermost flow fragment facing the manifold and around inducement holes of two neighboring flow fragments between the two flow fragments,
the connection dam is formed by laser welding to a brazing filler protruding from each individual flow fragment and located at each individual flow fragment or by laser welding applied to each individual flow fragment,
the connection dam encloses a plurality of inducement holes of each individual flow fragment or encloses one or each of the plurality of inducement holes, and
when viewed from the slit of the manifold, the connection dam has different occupied areas in two neighboring flow fragments of the plurality of flow fragments, the connection dam being repeated with the two neighboring flow fragments of the plurality of flow fragments as a unit.

8. The stress relief structure according to claim 6, wherein
the plurality of flow fragments has a connection dam formed around an inducement hole of a lowermost flow fragment at a lower side of the lowermost flow fragment facing the manifold and around inducement holes of two neighboring flow fragments between the two flow fragments,
the connection dam is formed by laser welding to a brazing filler protruding from each individual flow fragment and located at each individual flow fragment or by laser welding applied to each individual flow fragment,
the connection dam encloses a plurality of inducement holes of each individual flow fragment or encloses one or each of the plurality of inducement holes, and
when viewed from the slit of the manifold, the connection dam has the same occupied area in two neighboring flow fragments of the plurality of flow fragments.

9. The stress relief structure according to claim 6, wherein
when viewed from the individual sidewalls of the manifold,
the plurality of flow fragments has:
a plurality of recesses formed in a lower side of each individual flow fragment of two neighboring flow fragments between the lowermost flow fragment and an uppermost flow fragment;
a plurality of recesses formed in a lower side of an upper one of two neighboring flow fragments between the plurality of flow fragments; or
a plurality of recesses formed in a lower side of a lower one of two neighboring flow fragments between the plurality of flow fragments.

10. The stress relief structure according to claim 1, wherein
when the stress distribution module comprises a plurality of flow fragments stacked in the same numbers as the first to fourth sidewalls of the manifold formed in the shape of a quadrangular box, each of the flow fragments being disposed around a corresponding one of the individual sidewalls, an inducement hole corresponding to the slit of the manifold is formed in a central region of each individual flow fragment, and a receiving space is defined in a central region of the manifold so as to be enclosed by the plurality of flow fragments such that the connection module is inserted into the receiving space,
the connection module comprises a conductive plate and a current collector, the conductive plate and the current collector being quadrangular in shape and being sequentially stacked, and a plurality of sealants configured to enclose the current collector.

11. The stress relief structure according to claim 10, wherein each individual sealant is formed on an uppermost one of the plurality of flow fragments at each individual sidewall of the manifold, has the same shape as the uppermost flow fragment, encloses an inducement hole of the uppermost flow fragment and the receiving space of the stress distribution module, and has a guide hole corresponding to the inducement hole of each individual flow fragment.

12. The stress relief structure according to claim 10, wherein
the conductive plate and the current collector are inserted into the receiving space of the stress distribution module,
the current collector protrudes from the receiving space of the stress distribution module, and
the current collector and each individual sealant are in contact with the dummy interconnect.

13. The stress relief structure according to claim 1, wherein
when the stress distribution module comprises a plurality of flow fragments stacked in the same numbers as the first to fourth sidewalls of the manifold formed in the shape of a quadrangular box, each of the flow fragments being disposed around a corresponding one of the individual sidewalls, an inducement hole corresponding to the slit of the manifold is formed in a central region of each individual flow fragment, and a receiving space is defined in a central region of the manifold so as to be enclosed by the plurality of flow fragments such that the connection module is inserted into the receiving space, and
when the connection module comprises a conductive plate and a current collector sequentially stacked in the receiving space of the stress distribution module and a plurality of sealants configured to enclose the current collector outside the receiving space of the stress distribution module,
the dummy interconnect is quadrangular in shape, is located above the current collector and the individual sealants, and has a through-hole located at an edge of the dummy interconnect so as to correspond to a guide hole of each individual sealant.

14. The stress relief structure according to claim 13, wherein the through-hole of the dummy interconnect corresponds to an inducement hole of an uppermost flow fragment and is enclosed by the individual sealants together with the inducement hole of the uppermost flow fragment.

15. The stress relief structure according to claim 13, wherein
when the cell stack comprises a plurality of solid oxide fuel cells or a plurality of solid oxide electrolysis cells,
the dummy interconnect has a plurality of channels or trenches formed in a central region of the dummy interconnect under the cell stack, the plurality of channels or trenches being configured to allow oxygen gas or water vapor to flow therethrough in one direction.
